# EUROPÄISCHE PATENTSCHRIFT

(11) **EP 0 547 287 B1**
(45) Veröffentlichungstag und Bekanntmachung des Hinweises auf die Patenterteilung: **26.04.1995**
(21) Anmeldenummer: 92111121.7
(22) Anmeldetag: 01.07.1992
(51) Int. Cl.: F16F 13/00

(54) **Umschaltbares Lager**
Switchable support
Support commutable

(30) Priorität: 14.12.1991 DE 4141332
(43) Veröffentlichungstag der Anmeldung: 23.06.1993
(73) Patentinhaber: Firma Carl Freudenberg, 69469 Weinheim (DE)
(72) Erfinder: Hettler, Werner, W-6800 Mannheim 52 (DE); Simuttis, Arnold, Dr.-Ing., W-6550 Bad Kreuznach (DE)

(56) Entgegenhaltungen:
- EP-A- 0 173 273
- PATENT ABSTRACTS OF JAPAN vol. 15, no. 272 (M-1134)10. Juli 1991 & JP-A-03 092 639 (TOYOTA MOTOR CORP) 17. April 1991
- PATENT ABSTRACTS OF JAPAN vol. 8, no. 238 (M-335)(1675) 31. Oktober 1984 & JP-A-59 117 929 (TOYODA GOSEI KK) 7. Juli 1984

## Beschreibung

Die Erfindung betrifft ein umschaltbares Lager, nach dem Oberbegriff von Anspruch 1.

Ein solches Lager ist aus der JP-A-3-92639 bekannt. Das vorbekannte Lager soll leerlaufbedingte Schwingungen und damit verbundene Geräusche im Innenraum eines Kraftfahrzeugs verhindern. Dazu ist es vorgesehen, daß die Länge einer Durchtrittsöffnung zwischen Arbeitsraum und Ausgleichsraum während des Betriebs des Kraftfahrzeugs bei abgenommenen Dach veränderbar ist und zwar derart, daß die Öffnung während der Fahrt vergleichsweise länger ist, als beim Betrieb des Motors mit Leerlaufdrehzahl. Um die Öffnung, die die Form eines Dämpfungskanals aufweist, in ihrer Länge den jeweiligen Betriebsbedingungen der Verbrennungskraftmaschine anpassen zu können, ist ein schaltbares Ventil vorgesehen, das durch eine Kontrolleinrichtung und einen Unterdruckversteller ansteuerbar ist. Bei geschlossenem Dach ist ein weiches Motorlager gewünscht. Das schaltbare Ventil, das durch einen Kolben gebildet ist, ist mit einem Ventilsitz, der einen Teil des Gehäuses bildet, bedarfsweise in Eingriff bringbar. Die Abdichtung in diesem Bereich ist problematisch, da eine befriedigende Abdichtung nur durch hohe Oberflächengüten und sehr geringe Toleranzen erreichbar ist. Außerdem kommt es bei Betätigung des Ventils zu unerwünschten Anschlaggeräuschen.

Aus der EP-OS-0 137 273 ist ein Lager bekannt, bei dem eine Verbindungsöffnung, die zentral innerhalb der Trennwand angeordnet ist, durch eine Verschlußplatte bedarfsweise freigegeben bzw. verschlossen werden kann. Zur Erzielung einer möglichst hochgradigen Dämpfung ist die zentrale Durchbrechung der Trennwand durch die Platte verschlossen und der Ausgleichs- und Arbeitsraum stehen nur über einen Drosselkanal miteinander in Verbindung.

Zur Verbesserung der Isolierung hochfrequenter Schwingungen gibt die Verschlußplatte die Ausnehmung in der Trennwand frei. Dabei ist allerdings zu beachten, daß bei dieser Ausgestaltung ein separates Betätigungsmittel in Form eines Pneumatikzylinders benötigt wird, was sowohl bezüglich der Baugröße des Lagers als auch in wirtschaftlicher und fertigungstechnischer Hinsicht wenig befriedigend ist.

Der Erfindung liegt die Aufgabe zugrunde, ein Lager der eingangs genannten Art derart weiterzuentwickeln, daß sich bei guter Dämpfung tieffrequenter Schwingungen und ausgezeichneten Isolationseigenschaften bezüglich hochfrequenter Schwingungen eine einfachere Bauform und eine in wirtschaftlicher Hinsicht kostengünstigere Herstellbarkeit ergibt, bei absolut dichter Verbindung zwischen Durchtrittsöffnung und Kolben und geräuschfreier Schaltbarkeit.

Diese Aufgabe wird erfindungsgemäß mit den kennzeichneten Merkmalen von Anspruch 1 gelöst. Auf vorteilhafte Ausgestaltungen nehmen die Unteransprüche bezug
Zur Lösung der Aufgabe ist es vorgesehen, daß die Trennwand eine zentral durchgehende Durchtrittsöffnung aufweist sowie in axialer Richtung zweiteilig ausgeführt und derartig durchbrochen ist und nur im Bereich der gitterartigen Struktur eine kreisförmige und in axialer Richtung schwingfähige Membran umschließt, daß der Kolben in zumindest einem Teilbereich seiner axialen Erstreckung von zumindest einer ringförmigen Schubfeder aus gummielastischem Werkstoff dichtend umschlossen ist, daß die Schubfeder auf einem relativ zum Gehäuse ortsfesten Widerlager abgestützt ist und daß die Rollmembran, der Wulst und die Schubfeder einstückig ineinanderübergehend ausgebildet sind.

Hierbei ist von Vorteil, daß die Stelleinrichtung in das Gehäuse des Lagers integriert ist, daß das Lager einen einfachen Aufbau aufweist und die benötigten Bauteile weitestgehend zusammen mit den Lagerbauteilen, die ohnehin benötigt werden, hergestellt werden können. Das Lager und die Stelleinrichtung weisen aus Resonanzgründen ein möglichst geringes Eigengewicht auf und sind kostengünstig herstellbar. Die vergleichsweise einfache Betätigung der Stelleinrichtung sowie die kompakten Abmessungen und das geringe Gewicht des erfindungsgemäßen Lagers machen eine breite Anwendung, beispielsweise als Motorlager in preiswerten Kraftfahrzeugen möglich. Bei einer einstückigen Ausgestaltung der Rollmembran mit dem stopfenartigen Wulst ist die vergleichsweise einfache Herstellbarkeit und absolute dichte Verbindung zwischen den Teilen von Vorteil. Außerdem ist von Vorteil, daß der stopfenartige Wulst, der aus dem gleichen Material bestehen kann, wie die Rollmembran, bei Anschlagbewegungen an die Trennwand und einem Verschließen der Durchtrittsöffnung keine Anschlaggeräusche verursacht, die sich in das angeschlossene Bauteil fortpflanzen könnten. Zu einer weiteren Reduzierung der Anschlagerschütterungen/Anschlaggeräusche können die Durchtrittsöffnung und/oder der stopfenartige Wulst verschiedenartig ausgebildet sein, so daß ein allmähliches Verschließen ermöglicht wird.

Hochfrequente Schwingungen mit kleinen Amplituden werden durch die Ausgestaltung der Trennwand und der darin angeordneten Membran auch dann isoliert, wenn der stopfenförmige Wulst die Durchtrittsöffnung durch die Trennwand verschließt. Vergleichbar ist die Funktion des Lagers dann mit Hydrolagern, die allgemein bekannt sind. Durch das Freigeben der Durchtrittsöffnung in der Trennwand kann die Dämpfung im niederfrequenten Bereich ausgeschaltet werden und ein Tilger, beispielsweise im Bereich zwischen 20 und 100 Hz eingestellt werden.

Die Schubfeder, die eine Rückstellfeder bildet, bedingt, daß die Druckbeaufschlagung der Steuerdruckdose nur für einen Betriebszustand erfolgen muß. Damit besteht die Möglichkeit, daß die Schubfeder den Kolben im nichtdruckbeaufschlagten Zustand gegen die Durchtrittsöffnung in der Trennwand fährt und diese verschließt oder die Durchgangsöffnung freigibt.

Durch die einstückig ineinanderübergehende Ausgestaltung von Rollmembran, Wulst und Schubfeder, ist eine besonders einfache Herstellung des Lagers möglich.

Die Steuerdruckdose ist mit einem Pneumatikanschluß versehen und in Abhängigkeit der jeweiligen Gegebenheiten des Anwendungsfalles mit Überdruck oder Unterdruck beaufschlagbar. Die Beaufschlagung mit Überdruck bietet sich insbesondere dann an, wenn an das Lager angrenzende Maschinenelemente, wie beispielsweise Hydraulikzylinder, ohnehin mit Überdruck beaufschlagt werden müssen und an eine Druckverteilereinrichtung angeschlossen sind. Eine Beaufschlagung der Steuerdruckdose mit Unterdruck kann insbesondere im Bereich von Kraftfahrzeugen mit Ottomotoren von Vorteil sein, da Unterdruck aus dem Saugrohr bzw. einem daran angeschlossenen Druckspeicher zumeist problemlos verfügbar ist.

Zur Verbesserung der Gebrauchsdauer können die Rollmembran und/oder die Schubfeder eine Gewebearmierung aufweisen. Dies ist insbesondere in den Bereichen sinnvoll in denen sich die Dicke des Materials stark verändert, beispielsweise im Übergangsbereich zwischen der Rollmembran und dem stopfenförmigen Wulst und dem Übergang zwischen der Halterung der Rollmembran zwischen Trennwand und Gehäuse und der dünn ausgebildeten Begrenzungswand.

Dem Kolben und/oder dem Gehäuseboden können Anschlagpuffer zur Begrenzung von Extremauslenkungen des Kolben relativ zum Gehäuse zugeordnet sein. Ein weiterer Vorteil der Anschlagpuffer ist darin zu sehen, daß die Schubfeder und die Anschlagpuffer derart miteinander funktionieren, daß Resonanzschwingungen der Stelleinrichtung zuverlässig vermieden werden können. Die Schubfedern können beispielsweise derart ausgestaltet sein, daß die Anschlagpuffer dadurch unter axialer Vorspannung kraftbeaufschlagt werden, und sich an einem Widerlager, das Bestandteil des Gehäuses sein kann, anlegen.

Um eine gute Beweglichkeit der Stelleinrichtung in axialer Richtung zu gewährleisten und möglichst geringe Betätigungskräfte, ist es vorgesehen, daß der in axialer Richtung zwischen der Rollmembran und der Steuerdruckdose gebildete Hohlraum zumindest eine zur Atmosphäre hin offene Entlüftungsöffnung aufweist.

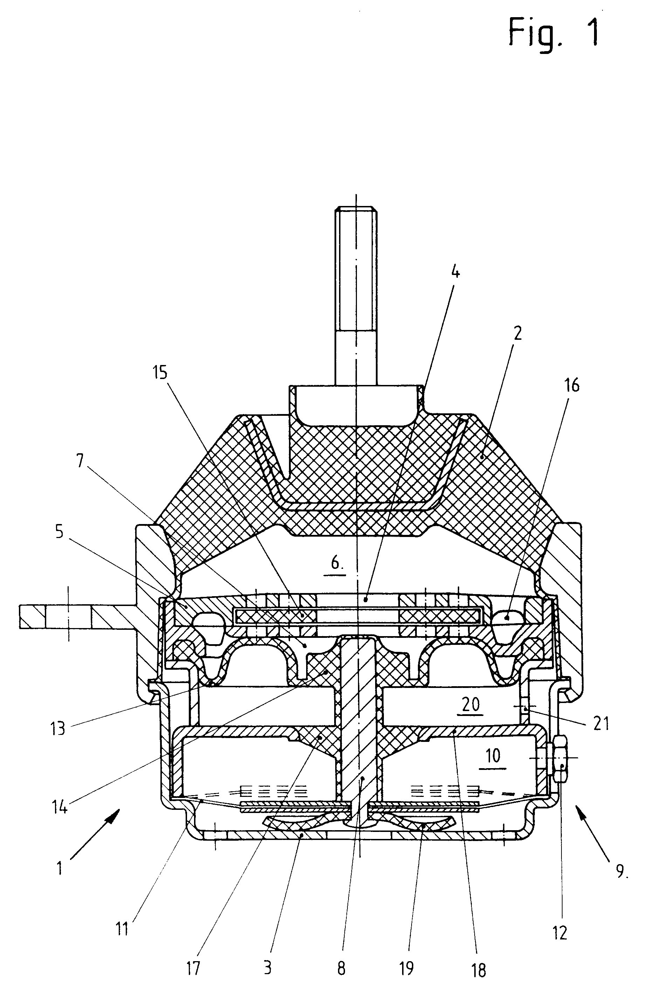

Der Gegenstand der vorliegenden Erfindung wird nachfolgend anhand der als Anlage beigefügten Zeichnungen weiter verdeutlicht. In den Ausführungsbeispielen der Figuren 1 bis 7 sind die zu berücksichtigenden Einzelkomponenten in geschnittener Darstellung gezeigt. In den Figuren 1, 2, 5, 6 und 7 ist jeweils ein Ausführungsbeispiel eines umschaltbaren Lagers gezeigt, dessen Steuerdruckdose mit Unterdruck beaufschlagbar ist.

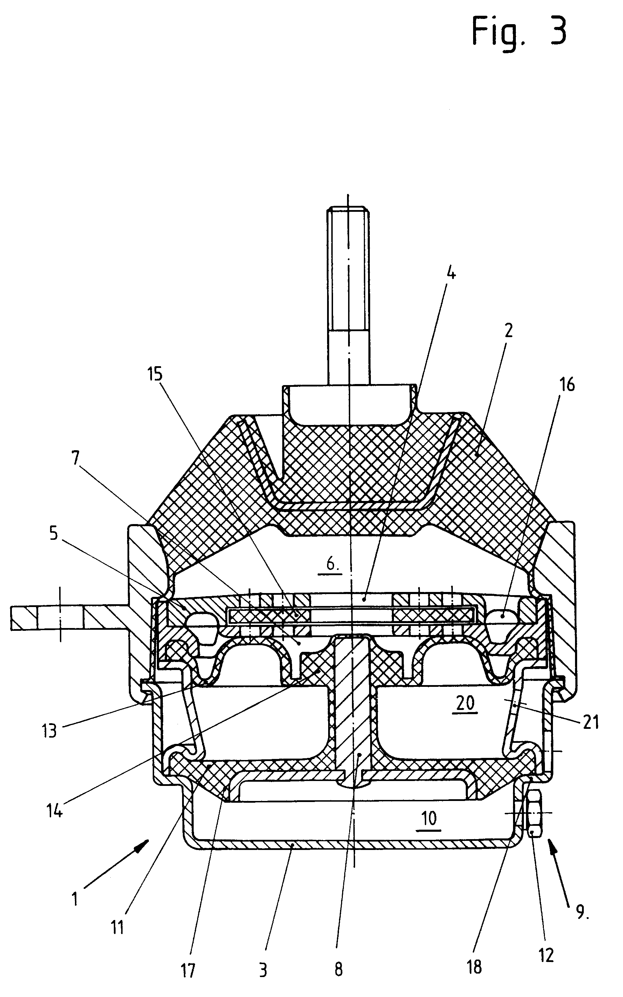

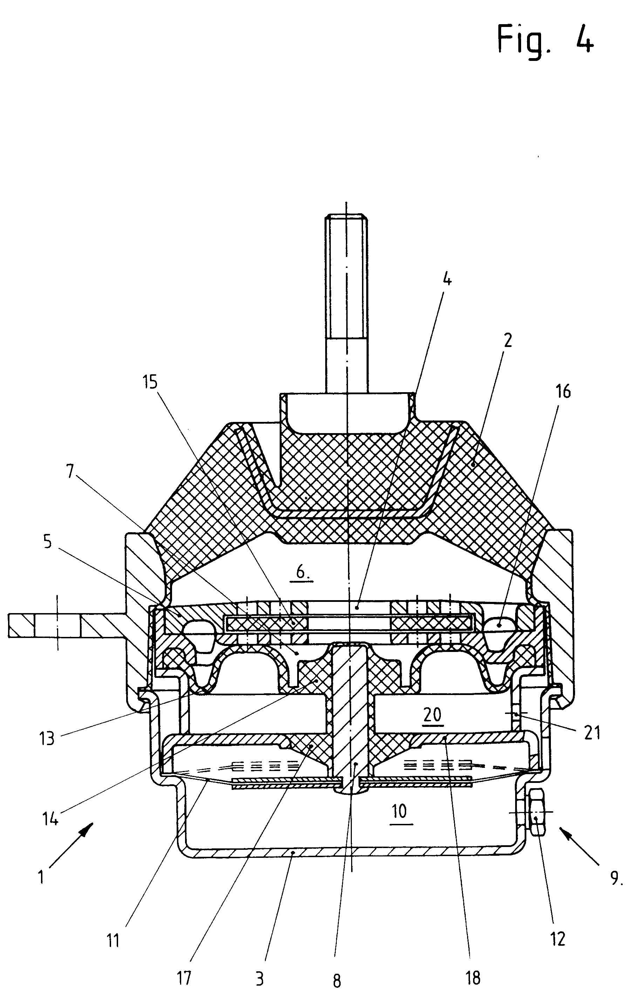

In den Figuren 3 und 4 ist die Steuerdruckdose mit Überdruck beaufschlagbar.

Die in den Figuren 1 bis 7 dargestellten Lager sind als Motorlager ausgestaltet. Die umschaltbaren Lager umfassen ein topfförmiges Gehäuse 1, bei dem die Öffnung durch ein ringförmig ausgebildetes Federelement 2 verschlossen ist. Innerhalb des Lagers ist eine Trennwand 5 angeordnet, die eine zentrale Durchtrittsöffnung 4 aufweist und in axialer Richtung einerseits mit dem Federelement 2 einen Arbeitsraum 6 und in axialer Richtung andererseits mit einer benachbarten Rollmembran 13 einen Ausgleichsraum 7 begrenzt. Der Arbeitsraum 6 und der Ausgleichsraum 7 sind flüssigkeitsgefüllt, wobei zumeist Wasser mit einem Gehalt an Frostschutz zur Anwendung gelangt. Der Arbeitsraum 6 und der Ausgleichsraum 7 sind flüssigkeitsleitend miteinander verbunden. Der kreisringförmige Dämpfungskanal 16, der innerhalb der Trennwand 5 angeordnet ist, bedingt die Dämpfung tieffrequenter Schwingungen mit großen Amplituden. Die Länge sowie der Querschnitt des Dämpfungskanals 16 sind den jeweiligen Gegebenheiten des Anwendungsfalles anzupassen, was dem mit der Abstimmung betrauten Fachmann keine Schwierigkeiten bereitet. Die Stelleinrichtung 9 ist in diesen Fällen pneumatisch betätigbar und innerhalb des Lagers angeordnet. Auch eine hydraulische Betätigung des umschaltbaren Lagers wäre denkbar, gestaltet sich allerdings komplizierter als die pneumatische Betätigung. Die Trennwand 5 der Lager nach den Figuren 1 bis 7 ist in axialer Richtung zweiteilig ausgeführt und gitterartig durchbrochen und umschließt in diesem Bereich eine kreisförmige Membran 15.

Zur Funktion der Lager ist folgendes auszuführen:
Ist die Durchtrittsöffnung 4 innerhalb der Trennwand 5 durch den stopfenförmigen Wulst 14, der mit dem Kolben 8 verbunden ist, verschlossen, arbeitet das erfindungsgemäße Lager wie ein bekannt abgestimmtes Motor- und Fahrwerkslager, so daß niederfrequente Schwingungen großer Amplituden durch Flüssigkeitsverlagerungen innerhalb des Dämpfungskanals 16 gedämpft werden und hochfrequente Schwingungen mit kleinen Amplituden durch die innerhalb der Trennwand angeordnete, axial bewegliche Membran gut isoliert werden können. Eine Umschaltung des Lagers bewirkt ein Freigeben der Durchtrittsöffnung 4, so daß die Dämpfung im niederfrequenten Bereich ausgeschaltet werden kann und beispielsweise auch darüber hinaus ein Tilger im Bereich zwischen 20 und 100 Hz eingestellt werden kann. Diese Funktion bedingt eine verbesserte Isolierung hochfrequenter Schwingungen.

In Figur 1 wird das erfindungsgemäße Lager durch Unterdruck betätigt. Die Steuerdruckdose 10, die mit einem Pneumatikanschluß 12 versehen ist, kann beispielsweise mit einem Unterdruckspeicher verbunden sein, der mit einer Motorsteuerung einer angrenzenden Verbrennungskraftmaschine signalleitend verbunden ist. Das hier dargestellte Lager ist ohne Unterdruckbeaufschlagung gezeigt. Bei Unterdruckbeaufschlagung bewegt sich die Stelleinrichtung 9 in Richtung der Durchtrittsöffnung 4 der Trennwand 5. Durch den im Vergleich zum Atmosphären-Druck relativen Unterdruck innerhalb der Steuerdruckdose 10 bewegt sich der Kolben 8, an dem die zweite Ringmembran 11 dichtend befestigt ist gegen den Widerstand der Schubfeder 17, bis der stopfenartige Wulst 14 mit der Durchtrittsöffnung 4 in Eingriff ist. Sollte zur Schwingungsisolierung der oben beschriebene Tilgereffekt benötigt werden, muß die Öffnung der Trennwand 5 axial rohrartig verlängert werden.

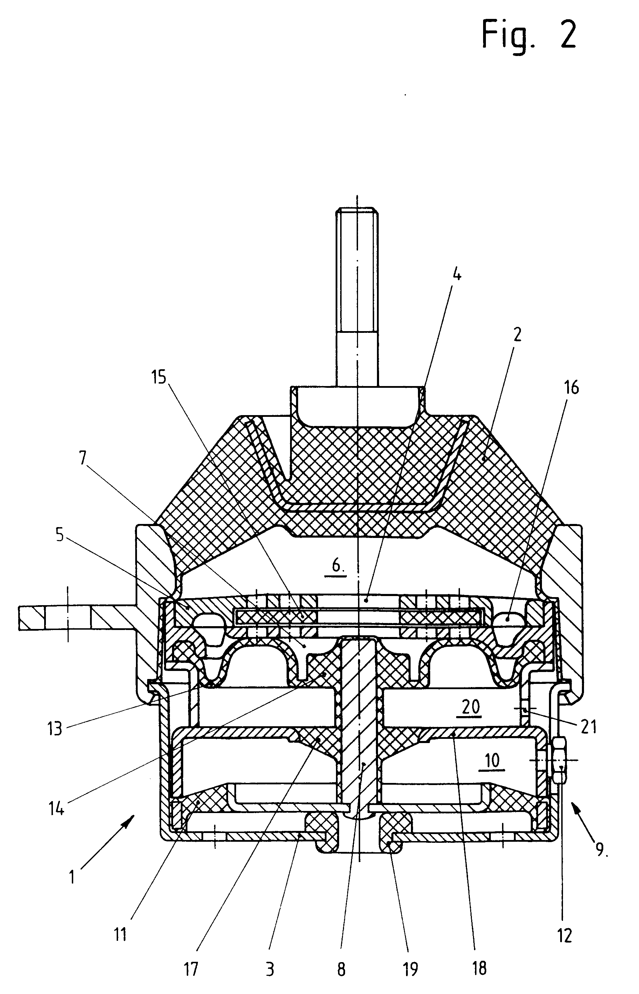

Eine im wesentlichen gleiche Funktion weist das Lager gemäß Figur 2 auf. Die Unterschiede zu dem bereits beschriebenen Lager bestehen in einer abweichend ausgestalteten zweiten Ringmembran 11, die ähnlich wie die Schubfeder 17 ebenfalls federnd ausgelegt sein kann, wobei die Federn an sich kompakter ausgeführt werden können und im einzelnen geringere Abmessungen aufweisen. Außerdem ist der Anschlagpuffer 19 in diesem Beispiel in den Gehäuseboden eingeknöpft, was in fertigungstechnischer Hinsicht von Vorteil und von hervorzuhebender Bedeutung ist.

In den Figuren 3 und 4 sind erfindungsgemäß Lager dargestellt, deren Steuerdruckdosen 10 über Pneumatikanschlüsse 12 mit Überdruck beaufschlagbar sind. In den hier dargestellten Positionen befinden sich die Schubfedern 17 in weitgehend entspanntem Zustand und die Steuerdruckdosen 10 sind nicht mit Überdruck beaufschlagt. Bei Beaufschlagung der Steuerdruckdosen 10 mit Überdruck bewegt sich der Kolben 8 entgegen der Rückstellkraft der Schubfeder 17 in Richtung Geschlossenstellung der Durchtrittsöffnung 4, bis der stopfenartige Wulst 14 die Trennwand 5 im Bereich der Durchtrittsöffnung 4 dichtend berührt. Die Funktion des Lagers entspricht dann der eines bekannten Hydrolagers. In Figur 4 ist die Stellung "Durchtrittssöffnung 4 geschlossen" für die zweite Ringmembran 11 mit gestrichelten Linien gezeigt.

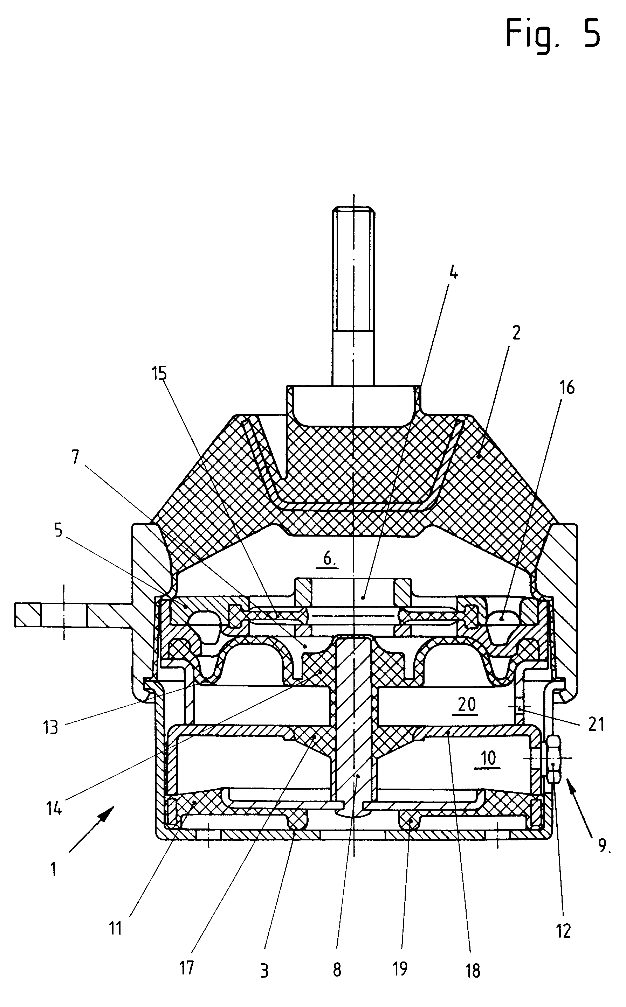

Die in den Figuren 5 bis 7 gezeigten Lager sind durch Unterdruckbeaufschlagung betätigbar. Die Membran 15 ist in Figur 5 in radialer Richtung einerseits unter axialer Vorspannung innerhalb der Trennwand 5 angeordnet und in einem kreisringförmigen Bereich mit einem axialen Abstand benachbart. Die Isolierung hochfrequenter Schwingungen ist dadurch gewährleistet. Zur Beeinflussung des Tilgereffektes bei geöffneter Durchtrittsöffnung 4 weist die Durchtrittsöffnung eine axiale Länge auf, die höchstens doppelt so groß ist, wie deren Durchmesser. Die zweite Ringmembran 11, die in diesem Beispiel, ähnlich wie in Figur 2, als Schubfeder gestaltet ist, ist einstückig mit den Anschlägen 19 ausgebildet, die auch im geöffneten Zustand der Durchtrittsöffnung 4 unter leichter axialer Vorspannung am Gehäuseboden 3 anliegen. Bei Beaufschlagung der Steuerdruckdose 10 mit Unterdruck bewegen sich der Kolben 8 und der stopfenartige Wulst 14 in Richtung der Durchtrittsöffnung 4, bis verschlossen ist.

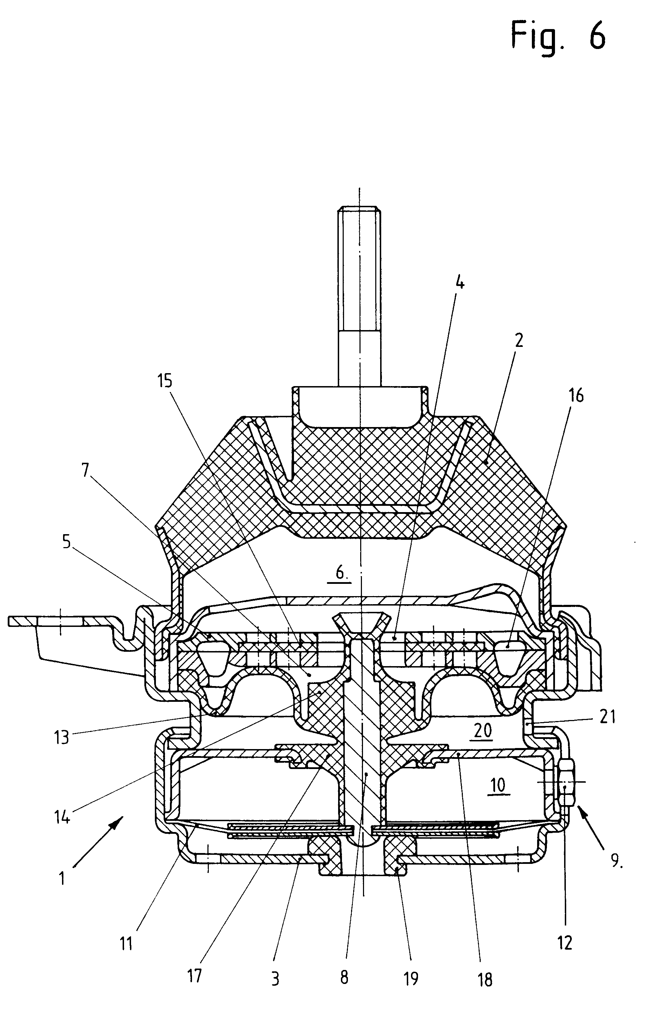

Die in Figur 6 dargestellte Ausführungsform entspricht im wesentlichen der Ausführungsform aus Figur 1, wobei der Anschlagpuffer 19 in den Gehäuseboden 3 des Gehäuses 1 eingeknöpft ist. Zusätzlich zu den bisher beschriebenen Ausgestaltungsbeispielen ist im Bereich der axialen Begrenzung des Kolbens 8 auf der der Trennwand 5 zugewandten Seite ein topfförmig ausgebildetes Dämpfungselement angeordnet, das einstückig mit dem Wulst 14 ausgebildet ist und die Axialbewegung des Kolbens 8 bei Annäherung an ein im Gehäuse 1 angeordneten Anschlagblech in Richtung der Durchtrittsöffnung 4 dämpft. Das genannte Anschlagblech dient gleichzeitig als Anschlag für das Federelement 2. Diese Ausgestaltung der Dämpfungsvorrichtung bewirkt einen progressiven Schließvorgang der Durchtrittsöffnung 4.

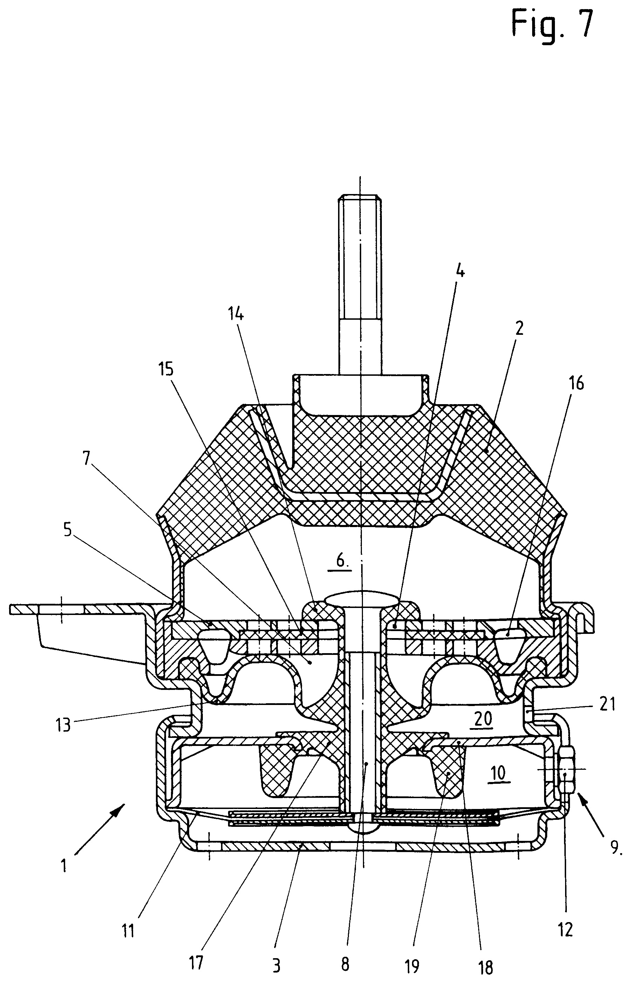

Bei dem in Figur 7 dargestellten Lager, bei dem die Steuerdruckdose 10 ebenfalls mit Unterdruck beaufschlagbar ist, wird im Gegensatz zu den bisher beschriebenen Beispielen bei Druckbeaufschlagung ein Öffnen der Durchtrittsöffnung 4 innerhalb der Trennwand 5 bedingt. Diese Ausgestaltung erweist sich insbesondere dann als sinnvoll, wenn die Durchtrittsöffnung 4 nur vergleichsweise selten freigegeben werden muß. Eine lange andauernde Beaufschlagung der Steuerdruckdose 10 mit Unterdruck erübrigt sich in diesem Falle. Durch diese, im Prinzip umgekehrte Wirkungsweise des erfindungsgemäßen Lagers sind die Anschlagpuffer 19 innerhalb der Steuerdruckdose angeordnet und begrenzen die Öffnungsbewegung des stopfenartigen Wulstes 14 in Richtung des Federkörpers 2.

## Patentansprüche

1. Umschaltbares Lager, umfassend ein topfförmiges Gehäuse (1), bei dem die Öffnung durch ein ringförmig ausgebildetes Federelement (2) aus elastomerem Werkstoff verschlossen ist, wobei in axialer Richtung zwischen dem Federelement (2) und dem Gehäuseboden (3) eine Trennwand (5) mit einer Durchtrittsöffnung (4) angeordnet ist, wobei die Trennwand (5) in axialer Richtung einerseits mit dem Federelement (2) einen Arbeitsraum (6) und in axialer Richtung andererseits mit einer ersten Ringmembran, die als Rollmembran (13) ausgebildet ist, einen Ausgleichsraum (7) begrenzt, wobei der Arbeits- (6) und der Ausgleichsraum (7) durch die Durchtrittsöffnung (4) und einen die Durchtrittsöffnung (4) außenseitig umschließenden Dämpfungskanal (16) flüssigkeitsleitend verbunden und mit einer hydraulischen Flüssigkeit gefüllt sind, wobei die Durchtrittsöffnung (4) durch ein Stellglied einer Stelleinrichtung (9) verschließbar ist und das Stellglied zumindest teilweise in dem Ausgleichsraum (7) angeordnet und durch ein Druckmittel betätigbar ist, wobei das Stellglied durch einen Kolben (8) gebildet ist, wobei der Kolben (8) in axialer Richtung auf der der Trennwand (5) zugewandten Seite flüssigkeitsdicht von der Rollmembran (13) umschlossen ist und einen stopfenartigen Wulst (14) aufweist, wobei der Wulst (14) bedarfsweise mit der Durchtrittsöffnung (4) der Trennwand (5) in Eingriff bringbar ist und wobei der Kolben (8) einer ortsfest im Gehäuse (1) angeordneten, druckmittelbeaufschlagbaren Steuerdruckdose (10) gasdicht und relativ beweglich zugeordnet ist, die durch eine zumindest teilweise elastisch nachgiebige zweite Ringmembran begrenzt ist, die den Kolben (8) und die Steuerdruckdose (10) gegenüber dem Gehäuse (1) abdichtet, dadurch gekennzeichnet, daß die Trennwand (5) eine zentral durchgehende Durchtrittsöffnung (4) aufweist sowie in axialer Richtung zweiteilig ausgeführt und gitterartig durchbrochen ist und nur im Bereich der gitterartigen Struktur eine kreisringförmige und in axialer Richtung schwingfähige Membran (15) umschließt, daß der Kolben (8) in zumindest einem Teilbereich seiner axialen Erstreckung von zumindest einer ringförmigen Schubfeder (17) aus gummielastischem Werkstoff dichtend umschlossen ist, daß die Schubfeder (17) auf einem relativ zum Gehäuse (1) ortsfesten Widerlager (18) abgestützt ist und daß die Rollmembran (13), der Wulst (14) und die Schubfeder (17) einstückig ineinander übergehend ausgebildet sind.

2. Lager nach Anspruch 1, dadurch gekennzeichnet, daß die Steuerdruckdose (10) mit einem Pneumatikanschluß (12) versehen ist.

3. Lager nach einem der Ansprüche 1 bis 2, dadurch gekennzeichnet, daß die Steuerdruckdose (10) mit Überdruck beaufschlagbar ist.

4. Lager nach einem der Ansprüche 1 bis 2, dadurch gekennzeichnet, daß die Steuerdruckdose mit einem Vakuum beaufschlagbar ist.

5. Lager nach einem der Ansprüche 1 bis 4, dadurch gekennzeichnet, daß die Rollmembran (13) und/oder die Schubfeder (17) eine Gewebearmierung aufweisen.

6. Lager nach einem der Ansprüche 1 bis 5, dadurch gekennzeichnet, daß dem Kolben (8) und/oder dem Gehäuseboden (3) Anschlagpuffer (19) zur Begrenzung von Extremauslenkungen des Kolbens (8) relativ zum Gehäuse (1) zugeordnet sind.

7. Lager nach einem der Ansprüche 1 bis 6, dadurch gekennzeichnet, daß der in axialer Richtung zwischen der Steuerdruckdose (10) und der Rollmembran (13) gebildete Hohlraum (20) zumindest eine zur Atmosphäre offene Entlüftungsöffnung (21) aufweist.

## Claims

1. A switchable support comprising a cup-shaped housing (1) in which the opening is closed by a spring element (2) of annular design made of elastomeric material, a dividing wall (5) with a passage opening (4) being arranged axially between the spring element (2) and the bottom (3) of the housing, the dividing wall (5) forming on one side in the axial direction a working space (6) with the spring element (2) and delimiting on the other side in the axial direction a compensating space (7) with a first annular diaphragm, which is designed as a rolling diaphragm (13), the working space (6) and the compensating space (7) being connected, in a manner which allows the flow of fluid, by the passage opening (4) and a damping passage (16) which surrounds the passage opening (4) on the outside, and being filled with a hydraulic fluid, the passage opening (4) being closable by means of a setting element of a setting device (9) and the setting element being arranged at least partially in the compensating space (7) and being actuable by means of a pressure medium, the setting element being formed by a piston (8), the piston (8) being surrounded fluid-tightly by the rolling diaphragm (13) axially at the end facing the dividing wall (5) and having a plug-like bead (14), the bead (14) being movable into engagement with the passage opening (4) in the dividing wall (5) when required, and the piston (8) being associated gas-tightly and in a manner which allows relative motion with a control pressure cell (10) which is arranged in a fixed location in the housing (1), can be supplied with pressure medium and is bounded by an at least partially elastically flexible second annular diaphragm which seals off the piston (8) and the control pressure cell (10) from the housing (1), characterized in that the dividing wall (5) has a passage opening (4) passing through it centrally and is of two-part design in the axial direction and perforated in the manner of a grille and surrounds an annular and axially oscillatory diaphragm (15) only in the region of the grille-like structure, in that the piston (8) is surrounded in a sealing manner over at least part of its axial extent by at least one annular shear spring (17) made from rubber-elastic material, in that the shear spring (17) is supported on an abutment (18) fixed relative to the housing (1) and in that the rolling diaphragm (13), the bead (14) and the shear spring (17) merge integrally into one another.

2. A support according to claim 1, characterized in that the control pressure cell (10) is provided with a pneumatic connection (12).

3. A support according to either of claims 1 or 2, characterized in that the control pressure cell (10) can be subjected to excess pressure.

4. A support according to either of claims 1 or 2, characterized in that the control pressure cell can be subjected to a vacuum.

5. A support according to any of claims 1 to 4, characterized in that the rolling diaphragm (13) and/or the shear spring (17) have a fabric reinforcement.

6. A support according to any of claims 1 to 5, characterized in that the piston (8) and/or the bottom (3) of the housing are assigned stop buffers (19) to limit extreme deflections of the piston (8) relative to the housing (1).

7. A support according to any of claims 1 to 6, characterized in that the cavity (20) formed axially between the control pressure cell (10) and the rolling diaphragm (13) has at least one vent opening (21) open to atmosphere.

## Revendications

1. Support commutable, comportant un carter en forme de pot (1), dans lequel l'ouverture est fermée par un élément élastique (2) de forme annulaire et constitué d'un matériau élastomère, il est prévu dans une direction axiale entre l'élément élastique (2) et le fond de carter (3) une paroi séparatrice (5) pourvue d'une ouverture de passage (4), la paroi séparatrice (5) délimite dans une direction axiale d'un côté avec l'élément élastique (2) une chambre de travail (6) et dans une direction axiale de l'autre côté avec une première membrane annulaire, qui est agencée comme une membrane enroulable (13), une chambre d'équilibrage (7), la chambre de travail (6) et la chambre d'équilibrage (7) sont reliées, avec possibilité de transmission de liquide, par l'ouverture de passage (4) et par un canal d'amortissement (16) entourant extérieurement l'ouverture de passage (4) et elles sont remplies d'un liquide hydraulique, l'ouverture de passage (4) peut être fermée par un organe d'un dispositif d'actionnement (9) et l'organe d'actionnement est disposé au moins en partie dans la chambre d'équilibrage (7) et peut être sollicité par un agent de pression, l'organe d'actionnement est constitué par un piston (8), ce piston (8) est entouré dans une direction axiale, sur le côté dirigé vers la paroi séparatrice (5) et de façon étanche au liquide, par la membrane enroulable (13) et comporte un bourrelet (14) en forme de tampon, ce bourrelet (14) pouvant en cas de besoin être en contact de fermeture avec l'ouverture de passage (4) de la paroi séparatrice (5), et en outre le piston (8) est associé, de façon étanche au gaz et avec mobilité relative, à une boîte de pression de commande (10), installée en position fixe dans le carter (1), pouvant être sollicité par du fluide sous pression et qui est délimitée par une seconde membrane annulaire au moins en partie élastiquement flexible, qui assure l'étanchéité du piston (8) et de la boîte de pression de commande (10) par rapport au carter (1), support caractérisé en ce que la paroi séparatrice (5) comporte une ouverture de passage (4) disposée au centre et réalisée en direction axiale en deux parties, en étant évidée de façon réticulée et en entourant, seulement dans la zone de la structure réticulée, une membrane (15) de forme annulaire et capable d'osciller dans une direction axiale, en ce que le piston (8) est entouré de façon étanche, au moins dans une zone partielle de son étendue axiale, par au moins un ressort de poussée (17) de forme annulaire, constitué d'un matériau ayant l'élasticité du caoutchouc, en ce que le ressort de poussée (17) est soutenu par un contre-appui (18) installé en position fixe par rapport au carter (1) et en ce que la membrane enroulable (13), le bourrelet (14) et le ressort de poussée (17) sont agencés de façon à s'interpénétrer d'une seule pièce.

2. Support selon la revendication 1, caractérisé en ce que la boîte de pression de commande (10) est pourvue d'un raccord pneumatique (12).

3. Support selon une des revendications 1 et 2, caractérisé en ce que la boite de pression de commande (10) peut être sollicitée par une surpression.

4. Support selon une des revendications 1 et 2, caractérisé en ce que la boîte de pression de commande peut être sollicitée par un vide.

5. Support selon une des revendications 1 à 4, caractérisé en ce que la membrane enroulable (13) et/ou le ressort de poussée (17) comporte un renforcement en tissu.

6. Support selon une des revendications 1 à 5, caractérisé en ce que le piston (8) et/ou le fond de carter (3) sont associés à des tampons de butée (19) en vue d'une limitation d'excursion extrême du piston (8) par rapport au carter (1).

7. Support selon une des revendications 1 à 6, caractérisé en ce que la cavité (20) formée dans une direction axiale entre la boite de pression de commande (10) et la membrane enroulable (13) comporte au moins un orifice d'aération (21) ouvert vers l'atmosphère.
